# EUROPÄISCHE PATENTANMELDUNG

(11) **EP 4 376 208 A1**
(43) Veröffentlichungstag der Anmeldung: **29.05.2024**
(21) Anmeldenummer: 22209857.6
(22) Anmeldetag: 28.11.2022
(51) Int. Cl.: H01M 50/533, H01M 50/536, H01M 50/538, H01M 10/04

(54) **ELEKTROCHEMISCHE ZELLE UND VERFAHREN ZUR HERSTELLUNG EINER ELEKTROCHEMISCHEN ZELLE**

(71) Anmelder: Manz AG, 72768 Reutlingen (DE)
(72) Erfinder: Kirschbaum, Patrick, 72760 Reutlingen (DE)
(74) Vertreter: Kohler Schmid Möbus Patentanwälte

(57) **Zusammenfassung**

Die Erfindung betrifft eine elektrochemische Zelle (10) mit einem Elektrodenwickel (20), umfassend eine erste und eine zweite Elektrode, wobei zumindest eine Elektrode Ableiterfähnchen (46, 50, 52) aufweist, von denen zumindest einige an einer ersten Stirnseite des Elektrodenwickels (20) umgebogen sind und mit einem Stromsammler (70) elektrisch leitend verbunden sind, wobei an der ersten Stirnseite des Elektrodenwickels (20) zumindest ein ableiterfähnchenfreier Flächenbereich (28, 30, 32) vorgesehen ist und der Stromsammler (70) eine Elektrolytbefüllöffnung (72, 74, 76) aufweist, die im Bereich des zumindest einen ableiterfähnchenfreien Flächenbereichs (28, 30, 32) angeordnet ist.

## Beschreibung

Die Erfindung betrifft eine elektrochemische Zelle mit einem Elektrodenwickel, umfassend eine erste und eine zweite Elektrode, wobei zumindest eine Elektrode Ableiterfähnchen aufweist, von denen zumindest einige an einer ersten Stirnseite der elektrochemischen Zelle umgebogen sind und mit einem Stromsammler elektrisch leitend verbunden sind.

Weiterhin betrifft die Erfindung ein Verfahren zu Herstellung einer elektrochemischen Zelle.

Bisher ist es bekannt, eine zylindrisch gewickelte elektrochemische Zelle herzustellen, indem an einem Elektrodenband Ableiterfähnchen ausgebildet werden, indem Abschnitte des Randbereichs des Elektrodenbands entfernt werden. Nach dem Aufwickeln des Elektrodenbandes zu einem Elektrodenwickel werden die Ableiterfähnchen vollflächig umgewälzt, umgebördelt oder verdichtet. Dadurch wird die Stirnseite des Elektrodenwickels nahezu vollständig abgedichtet bzw. versiegelt. Dadurch kann Elektrolyt nur sehr langsam in den Elektrodenwickel eindringen. Der Herstellungsprozess einer elektrochemischen Zelle wird dadurch erheblich verlangsamt.

Aufgabe der vorliegenden Erfindung ist es daher, eine elektrochemische Zelle bereitzustellen, die deutlich schneller hergestellt werden kann, bei der insbesondere das Befüllen mit Elektrolyt schneller von statten gehen kann.

Gelöst wird diese Aufgabe erfindungsgemäß durch eine elektrochemische Zelle mit einem Elektrodenwickel, umfassend eine erste und eine zweite Elektrode, wobei zumindest eine Elektrode Ableiterfähnchen aufweist, von denen zumindest einige an einer ersten Stirnseite des Elektrodenwickels umgebogen sind und mit einem Stromsammler elektrisch leitend verbunden sind, wobei an der ersten Stirnseite des Elektrodenwickels zumindest ein ableiterfähnchenfreier Flächenbereich vorgesehen ist und der Stromsammler eine Elektrolytbefüllöffnung aufweist, die im Bereich des zumindest einen ableiterfähnchenfreien Flächenbereichs angeordnet ist. Dadurch, dass ein ableiterfähnchenfreier Flächenbereich vorgesehen ist, kann an dieser Stelle Elektrolyt schneller in den Elektrodenwickel eindringen. Insbesondere erfolgt in den ableiterfähnchenfreien Flächenbereichen keine Abdichtung oder Versiegelung des Elektrodenwickels. Somit kann die elektrochemische Zelle sehr viel schneller mit Elektrolyt befüllt werden, als dies bisher möglich war. Dadurch, dass die Elektrolytbefüllöffnung des Stromsammlers im Bereich des ableiterfähnchenfreien Flächenbereichs angeordnet ist, ist auch keine zu große laterale Bewegung des Elektrolyts notwendig, um alle Bereiche des Elektrodenwickels erreichen zu können. Flächenbereich mit und ohne Ableiterfähnchen können an beiden gegenüberliegenden Stirnseiten des Elektrodenwickels ausgebildet sein.

Die elektrochemische Zelle kann als Primärzelle (Batterie) oder Sekundärzelle (Akkumulator) ausgebildet sein. Alternativ kann die elektrochemische Zelle als Kondensator ausgebildet sein.

Besonders vorteilhaft ist es, wenn der Abstand zwischen Ableiterfähnchen und/oder zwischen Gruppen von Ableiterfähnchen in einer Richtung des abgewickelten Elektrodenwickels zunimmt. Insbesondere kann der Abstand zwischen den Ableiterfähnchen und/oder zwischen Gruppen von Ableiterfähnchen in Richtung des abgewickelten Elektrodenwickels, also des Elektrodenbands vor der Aufwicklung, progressiv zunehmen. Dadurch können auf besonders einfache Art und Weise die ableiterfähnchenfreien Flächenbereiche an der Stirnseite des Elektrodenwickels hergestellt werden.

Alternativ oder zusätzlich kann vorgesehen sein, dass die Breite der Ableiterfähnchen und/oder von Gruppen von Ableiterfähnchen in einer Richtung des abgewickelten Elektrodenwickels zunimmt. Somit kann beispielsweise erreicht werden, dass die Bereiche der Stirnseite, die Ableiterfähnchen aufweisen, kreissektorförmig ausgebildet sind. Entsprechendes gilt für den Abstand zwischen den Ableiterfähnchen oder zwischen Gruppen von Ableiterfähnchen. Durch den sich vergrößernden Abstand kann erreicht werden, dass die ableiterfähnchenfreien Flächenbereiche kreissektorförmig ausgebildet sind.

Der Abstand zwischen Ableiterfähnchen und/oder Gruppen von Ableiterfähnchen kann in einem einer Wicklung entsprechenden Längenabschnitt des abgewickelten Elektrodenwickels konstant sein. Die vorher beschriebene Zunahme des Abstands zwischen den Ableiterfähnchen und/oder Gruppen von Ableiterfähnchen kann somit von Längenabschnitt zu Längenabschnitt erfolgen.

Alternativ oder zusätzlich kann vorgesehen sein, dass die Breite der Ableiterfähnchen und/oder von Gruppen von Ableiterfähnchen in einem einer Wicklung entsprechenden Längenabschnitt des abgewickelten Elektrodenwickels konstant ist. Auch hier gilt, dass die vorher beschriebene Zunahme der Breite von Längenabschnitt zu Längenabschnitt zunehmen kann.

Ableiterfähnchen können oben und unten am Elektrodenwickel angeordnet sein. Dabei können die Ableiterfähnchen an einem Ende des Elektrodenwickels einer ersten Elektrode und die Ableiterfähnchen am anderen Ende des Elektrodenwickels der anderen Elektrode zugeordnet sein. Zwischen den Elektroden kann ein Separator vorgesehen sein. Ableiterfähnchen an gegenüberliegenden Seiten bzw. Rändern des abgewickelten Elektrodenwickels können gegenüberliegend oder versetzt zueinander angeordnet sein. Die Ableiterfähnchen an gegenüberliegenden Rändern des abgewickelten Elektrodenwickels können die gleiche Breite oder unterschiedliche Breiten aufweisen.

Der Stromsammler kann mit Ableiterfähnchen in einem Ableiterfähnchen aufweisenden Flächenbereich der ersten Stirnseite verschweißt sein, wobei die Fläche der Schweißstelle kleiner ist, als der die Ableiterfähnchen aufweisende Flächenbereich. Dadurch kann sichergestellt werden, dass nicht neben den Ableiterfähnchen geschweißt wird. Das Schweißen kann insbesondere mittels eines Lasers erfolgen. Wenn die Schweißstelle selbst kleiner ist als der Flächenbereich, der die Ableiterfähnchen aufweist, besteht eine größere Toleranz bei der Positionierung des Stromsammlers an der Stirnseite des Elektrodenwickels.

Der Stromsammler kann scheibenartig ausgebildet sein. Der Stromsammler, insbesondere eine Stromableiterscheibe, kann mit dem Gehäuse verschweißt sein. Das Gehäuse kann zusätzlich einen Deckel aufweisen.

Die ableiterfähnchenfreien Flächenbereiche der ersten Stirnseite und die Ableiterfähnchen aufweisenden Flächenbereiche der ersten Stirnseite können etwa dieselbe Größe aufweisen. Insbesondere kann in Summe der Flächenbereich, der Ableiterfähnchen aufweist, der Fläche der Flächenbereiche, die keine Ableiterfähnchen aufweisen, entsprechen. Bereiche mit und ohne Ableiterfähnchen können sich in Umfangsrichtung oder radial abwechseln. Dadurch kann eine gute und großflächige Auflage des Stromsammlers, insbesondere, wenn dieser scheibenartig ausgebildet ist, sichergestellt werden. Der Elektrodenwickel kann in einem Gehäuse angeordnet sein und der Stromsammler kann mit dem Gehäuse insbesondere fluiddicht verbunden, insbesondere verschweißt, sein. Dadurch kann sichergestellt werden, dass Elektrolyt das Gehäuse nicht verlässt.

In den Rahmen der Erfindung fällt außerdem ein Verfahren zur Herstellung einer elektrochemischen Zelle, insbesondere einer erfindungsgemäßen elektrochemischen Zelle, mit den Verfahrensschritten:
a. Herstellen eines Elektrodenbands
b. Ausbilden von Ableiterfähnchen an einem Rand des Elektrodenbands, wobei
   i. der Abstand zwischen Ableiterfähnchen und/oder zwischen Gruppen von Ableiterfähnchen in einer Richtung des Elektrodenbands zunimmt und/oder
   ii. die Breite der Ableiterfähnchen und/oder von Gruppen von Ableiterfähnchen in einer Richtung des Elektrodenbands zunimmt,
c. Aufwickeln des Elektrodenbands zu einem Elektrodenwickel
d. Anordnen eines Stromsammlers an einer ersten Stirnseite des Elektrodenwickels so, dass eine Elektrolytbefüllöffnung des Stromsammlers in einem ableiterfähnchenfreien Flächenbereich angeordnet ist,
e. Verschweißen des Stromsammlers mit zumindest einigen Ableiterfähnchen.

Die Ableiterfähnchen können gebildet werden, indem am oberen und/oder unteren Rand des Elektrodenbands Elektrodenmaterial entfernt wird. Dies kann beispielsweise mittels eines Lasers oder durch Stanzen erfolgen. Die elektrochemische Zelle kann als Primärzelle oder Sekundärzelle ausgebildet sein. Alternativ kann die elektrochemische Zelle als Kondensator ausgebildet sein. In diesem Fall ist der Separator vorzugsweise als Dielektrikum ausgebildet. Das Herstellen des Elektrodenwickels kann daher insbesondere derart erfolgen, dass Elektrodenmaterial auf beiden Seiten eines Separatorbands bzw. einer Separatorfolie oder Membran ausgebracht wird. Die Elektroden können dabei versetzt sein, sodass die eine Elektrode am oberen Rand des Elektrodenbands über den Separator übersteht und die andere Elektrode am unteren Rand des Elektrodenbands über den Separator übersteht. Danach wird das Elektrodenband aufgewickelt.

Dadurch, dass der Abstand zwischen Ableiterfähnchen und/oder Gruppen von Ableiterfähnchen variiert wird und/oder die Breite der Ableiterfähnchen und/oder von Gruppen von Ableiterfähnchen variiert wird, können stirnseitig an dem Elektrodenwickel, zumindest an einer Stirnseite, Flächenbereiche geschaffen werden, die Ableiterfähnchen aufweisen, und Flächenbereiche, die keine Ableiterfähnchen aufweisen. In den Bereichen, die keine Ableiterfähnchen aufweisen, kann Elektrolyt besonders einfach in den Elektrodenwickel eingebracht werden.

Vor dem Verschweißen des Stromsammlers mit den Ableiterfähnchen können die Ableiterfähnchen umgebogen werden. Dies kann beispielsweise mittels Bördeln erfolgen. Durch eine Elektrolytbefüllöffnung des Stromsammlers kann Elektrolyt eingefüllt werden. Die Elektrolytbefüllöffnung des Stromsammlers wird vorzugsweise so positioniert, dass sich diese über einem Bereich, der keine Ableiterfähnchen aufweist, befindet. Es können mehrere Elektrolytbefüllöffnungen vorgesehen sein.

Besondere Vorteile ergeben sich, wenn der Abstand zwischen Ableiterfähnchen oder Gruppen von Ableiterfähnchen und/oder die Breite von Ableiterfähnchen und/oder Gruppen von Ableiterfähnchen unter Berücksichtigung einer erfassten Größe und/oder Form von zumindest einem ableiterfähnchenfreien Flächenbereich und/oder zumindest einem Ableiterfähnchen aufweisenden Flächenbereich der Stirnseite einer vorher gefertigten elektrochemischen Zelle eingestellt wird. Eine Anpassung des Abstands oder der Breite kann insbesondere dann erfolgen, wenn festgestellt wird, dass die Größe und/oder Form um mehr als ein vorbestimmtes Maß von einer vorgegebenen Größe und/oder Form abweicht. Durch diese Maßnahme kann eine einheitliche Qualität der hergestellten elektrochemischen Zellen gesichert werden.

Die Größe und/oder Form von zumindest einem ableiterfähnchenfreien Flächenbereich und/oder zumindest einem Ableiterfähnchen aufweisenden Flächenbereich der Stirnseite kann gemäß einer Verfahrensvariante erfasst werden. Insbesondere kann die Erfassung optisch, beispielsweise mittels einer Kamera erfolgen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.
- Fig. 1: zeigt stark schematisiert eine elektrochemische Zelle;
- Fig. 2: zeigt eine Draufsicht auf die Stirnseite eines Elektrodenwickels;
- Fig. 3: zeigt eine erste Ausführungsform eines abgewickelten Elektrodenwickels;
- Fig. 4: zeigt eine zweite Ausführungsform eines abgewickelten Elektrodenwickels;
- Fig. 5: zeigt eine weitere Ausführungsform eines abgewickelten Elektrodenwickels;
- Fig. 6: zeigt die Draufsicht auf die Stirnseite eines Elektrodenwickels, wobei Schweißstellen eingezeichnet sind;
- Fig. 7: zeigt die Draufsicht auf einen Stromsammler, der mit den Ableiterfähnchen eines Elektrodenwickels verschweißt ist.

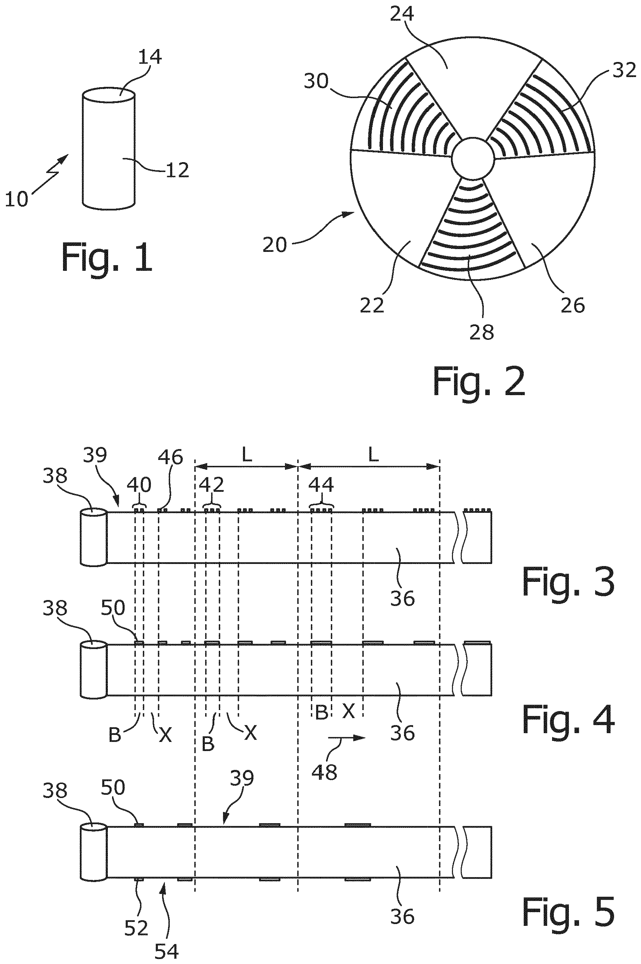

Die Figur 1 zeigt eine elektrochemische Zelle 10, die als zylindrische elektrochemische Zelle ausgebildet ist. Die elektrochemische Zelle 10 weist ein Gehäuse 12 auf, in dem ein hier nicht dargestellter Elektrodenwickel angeordnet ist. Weiterhin ist Elektrolyt in der elektrochemischen Zelle 10 vorgesehen. Die elektrochemische Zelle 10 ist durch einen Stromsammler 14, der auch einen Deckel darstellt, verschlossen.

Die Figur 2 zeigt eine Draufsicht auf eine Stirnseite (Oberseite oder Unterseite) eines Elektrodenwickels 20. Es sind drei im vorliegenden Ausführungsbeispiel kreissektorförmige, Flächenbereiche 22, 24, 26 vorgesehen, die Ableiterfähnchen aufweisen. Symbolisch ist ein umgebogenes Ableiterfähnchen 46 eingezeichnet. Die Ableiterfähnchen stellen den elektrischen Kontakt zu einer Elektrode des Elektrodenwickels 20 dar. Zwischen den Flächenbereichen 22, 24, 26 sind ableiterfähnchenfreie Flächenbereiche 28, 30, 32 vorgesehen. In diesen Bereichen kann Elektrolyt in den Elektrodenwickel 20 eingebracht werden. Im gezeigten Ausführungsbeispiel sind die Flächenbereiche 22, 24, 26 etwa gleichgroß ausgebildet wie die ableiterfähnchenfreien Flächenbereiche 28, 30, 32. Somit entspricht der Flächenanteil der stirnseitigen Fläche mit Ableiterfähnchen 46 in etwa dem Flächenanteil der ableiterfähnchenfreien Flächenbereiche 28, 30, 32.

Die Figur 3 zeigt ein Elektrodenband 36, welches einer Abwicklung des Elektrodenwickels 20 entspricht. Am linken Ende des Elektrodenbands 36 ist ein Kern 38 zu sehen, um den herum das Elektrodenband 36 aufgewickelt werden kann. In einem oberen Randbereich 39 weist das Elektrodenband 36 Gruppen 40, 42, 44 von Ableiterfähnchen 46 auf. Der Abstand X zwischen den Gruppen 40, 42, 44 von Ableiterfähnchen 46 nimmt in Pfeilrichtung 48 zu, insbesondere nimmt er progressiv zu.

Auch die Breite B der Gruppen 40, 42, 44 von Ableiterfähnchen 46 nimmt in Pfeilrichtung 48 zu. Dabei ist zu beachten, dass im gezeigten Ausführungsbeispiel sowohl der Abstand X als auch die Breite B innerhalb eines Längenabschnitts L konstant bleibt, wobei die Längenabschnitte L jeweils einer Wicklung entsprechen, wenn das Elektrodenband 36 zum Elektrodenwickel 20 aufgewickelt ist.

Die Figur 4 unterscheidet sich von der Figur 3 lediglich darin, dass keine Gruppen 40, 42, 44 von Ableiterfähnchen 46 vorgesehen sind, sondern Ableiterfähnchen 50, deren Breite B in Pfeilrichtung 48 zunimmt. Außerdem nimmt der Abstand X zwischen zwei Ableiterfähnchen 50 in Pfeilrichtung 48 zu. Auch hier gilt, dass für einen einer Wicklung entsprechenden Längenabschnitt L der Abstand X und die Breite B konstant sind.

Anhand der Ausführungsform gemäß der Figur 5 soll gezeigt werden, dass Ableiterfähnchen 50 nicht nur in einem oberen Randbereich 39, sondern dass auch Ableiterfähnchen 52 auch in einem unteren Randbereich 54 des Elektrodenbands 36 vorgesehen sein können. Dabei sind die Ableiterfähnchen 52 einer anderen Elektrode zugeordnet als die Ableiterfähnchen 50.

Wenn die Ableiterfähnchen 46, 50, 52 nach dem Aufwickeln des Elektrodenbands 36 zu einem Elektrodenwickel 20 umgebogen werden, entstehen aufgrund der Breite und des Abstand zwischen den Ableiterfähnchen 46, 50, 52 die Flächenbereiche 22, 24, 26, 28, 30, 32 gemäß der Figur 2.

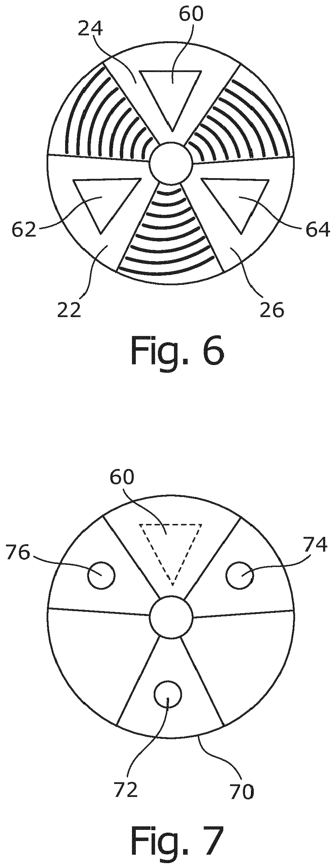

Die Figur 6 zeigt eine der Figur 2 entsprechende Darstellung, wobei hier zusätzlich eine Schweißstelle 60 eingezeichnet ist. An der Schweißstelle 60 werden die Ableiterfähnchen des Flächenbereichs 24 mit einem Stromsammler verschweißt. Entsprechende Schweißstellen 62, 64 sind auch für die anderen Flächenbereiche 22, 24 vorgesehen. Zu erkennen ist, dass die Schweißstellen 60, 62, 64 flächenmäßig kleiner sind als die Flächenbereiche 22, 24, 26. Dadurch kann sichergestellt werden, dass nicht abseits der Flächenbereiche 22, 24, 26 geschweißt wird und eine größere Toleranz hinsichtlich der Positionierung des Stromsammlers besteht.

Die Figur 7 zeigt eine Draufsicht auf einen Stromsammler 70, der mit den Ableiterfähnchen in den Flächenbereichen 22, 24, 26 verschweißt wurde. Exemplarisch ist die Schweißstelle 60 angedeutet. Zu erkennen ist, dass der Stromsammler 70 Elektrolytbefüllöffnungen 72, 74, 76 aufweist, durch die Elektrolyt in die elektrochemische Zelle eingefüllt werden kann. Die Elektrolytbefüllöffnungen 72, 74, 76 sind oberhalb der ableiterfähnchenfreien Flächenbereiche 28, 30, 32 (s. Figur 2) positioniert.

Die Ausgestaltung und Anzahl der Flächenbereiche 22 bis 32 sowie deren Form ist lediglich exemplarisch. Hier bestehen zahlreiche Variationsmöglichkeiten. Vorzugsweise sind die ableiterfähnchenfreien Flächenbereiche 30, 32, 28 umfangsmäßig oder Radial abwechselnd mit den Flächenbereichen 22, 24, 26, welche Ableiterfähnchen aufweisen, angeordnet.

Dadurch ergeben sich ausreichend Möglichkeiten, den Stromsammler 70, der scheibenartig ausgebildet sein kann, mit den Ableiterfähnchen zu verschweißen. Andererseits bestehen ausreichende Freiflächen, durch die Elektrolyt in die elektrochemische Zelle 10 eingefüllt werden kann.

## Patentansprüche

1. Elektrochemische Zelle (10) mit einem Elektrodenwickel (20), umfassend eine erste und eine zweite Elektrode, wobei zumindest eine Elektrode Ableiterfähnchen (46, 50, 52) aufweist, von denen zumindest einige an einer ersten Stirnseite des Elektrodenwickels (20) umgebogen sind und mit einem Stromsammler (70) elektrisch leitend verbunden sind, **dadurch gekennzeichnet, dass** an der ersten Stirnseite des Elektrodenwickels (20) zumindest ein ableiterfähnchenfreier Flächenbereich (28, 30, 32) vorgesehen ist und der Stromsammler (70) eine Elektrolytbefüllöffnung (72, 74, 76) aufweist, die im Bereich des zumindest einen ableiterfähnchenfreien Flächenbereichs (28, 30, 32) angeordnet ist.

2. Elektrochemische Zelle nach Anspruch 1, **dadurch gekennzeichnet, dass** der Abstand (X) zwischen Ableiterfähnchen (46, 50, 52) und/oder zwischen Gruppen (40, 42, 44) von Ableiterfähnchen (46, 50, 52) in einer Richtung des abgewickelten Elektrodenwickels (20) zunimmt.

3. Elektrochemische Zelle nach einem der vorhergehenden Ansprüche,
**dadurch gekennzeichnet, dass** die Breite (B) der Ableiterfähnchen (46, 50, 52) und/oder von Gruppen (40, 42, 44) von Ableiterfähnchen (46, 50, 52) in einer Richtung des abgewickelten Elektrodenwickels (20) zunimmt.

4. Elektrochemische Zelle nach einem der vorhergehenden Ansprüche,
**dadurch gekennzeichnet, dass** der Abstand (X) zwischen Ableiterfähnchen (46, 50, 52) und/oder Gruppen (40, 42, 44) von Ableiterfähnchen (46, 50, 52) in einem einer Wicklung entsprechenden Längenabschnitt (L) des abgewickelten Elektrodenwickels (20) konstant ist.

5. Elektrochemische Zelle nach einem der vorhergehenden Ansprüche,
**dadurch gekennzeichnet, dass** die Breite (B) der Ableiterfähnchen (46, 50, 52) und/oder von Gruppen (40, 42, 44) von Ableiterfähnchen (46, 50, 52) in einem einer Wicklung entsprechenden Längenabschnitt (L) des abgewickelten Elektrodenwickels (20) konstant ist.

6. Elektrochemische Zelle nach einem der vorhergehenden Ansprüche, **dadurch gekennzeichnet, dass** der Stromsammler (70) mit Ableiterfähnchen (46, 50, 52) in einem Ableiterfähnchen (46, 50, 52) aufweisenden Flächenbereich (22, 24, 26) der ersten Stirnseite verschweißt ist, wobei die Fläche der Schweißstelle (60, 62, 64) kleiner ist als der die Ableiterfähnchen (46, 50, 52) aufweisende Flächenbereich (22, 24, 26).

7. Elektrochemische Zelle nach einem der vorhergehenden Ansprüche, **dadurch gekennzeichnet, dass** der Stromsammler (70) scheibenartig ausgebildet ist.

8. Elektrochemische Zelle nach einem der vorhergehenden Ansprüche, **dadurch gekennzeichnet, dass** die ableiterfähnchenfreien Flächenbereiche (28, 30, 32) der ersten Stirnseite und die Ableiterfähnchen (46, 50, 52) aufweisenden Flächenbereiche (22, 24, 26) der ersten Stirnseite etwa dieselbe Größe aufweisen.

9. Elektrochemische Zelle nach einem der vorhergehenden Ansprüche, **dadurch gekennzeichnet, dass** der Elektrodenwickel (20) in einem Gehäuse (12) angeordnet ist und der Stromsammler (70) mit dem Gehäuse insbesondere fluiddicht verbunden, insbesondere verschweißt ist.

10. Verfahren zur Herstellung einer elektrochemischen Zelle, insbesondere nach einem der vorhergehenden Ansprüche, mit den Verfahrensschritten:
a. Herstellen eines Elektrodenbands (36),
b. Ausbilden von Ableiterfähnchen (46, 50, 52) an einem Rand (39, 54) des Elektrodenbands (36), wobei
i. der Abstand (X) zwischen Ableiterfähnchen (46, 50, 52) und/oder zwischen Gruppen (40, 42, 44) von Ableiterfähnchen (46, 50, 52) in einer Richtung des Elektrodenbands (36) zunimmt und/oder
ii. die Breite (B) der Ableiterfähnchen (46, 50, 52) und/oder von Gruppen (40, 42, 44) von Ableiterfähnchen (46, 50, 52) in einer Richtung des Elektrodenbands (36) zunimmt,
c. Aufwickeln des Elektrodenbands (36) zu einem Elektrodenwickel (20),
d. Anordnen eines Stromsammlers (70) an einer ersten Stirnseite des Elektrodenwickels (20) so, dass eine Elektrolytbefüllöffnung (72, 74, 76) des Stromsammlers (70) in einem ableiterfähnchenfreien Flächenbereich (28, 30, 32) angeordnet ist,
e. Verschweißen des Stromsammlers (70) mit zumindest einigen Ableiterfähnchen (46, 50, 52).

11. Verfahren nach Anspruch 10, **dadurch gekennzeichnet, dass**
a. der Abstand zwischen Ableiterfähnchen (46, 50, 52) oder Gruppen (40, 42, 44) von Ableiterfähnchen (46, 50, 52) und/oder
b. die Breite von Ableiterfähnchen (46, 50, 52) und/oder Gruppen (40, 42, 44) von Ableiterfähnchen (46, 50, 52) unter Berücksichtigung einer erfassten Größe und/oder Form von zumindest einem ableiterfähnchenfreien Flächenbereich (28, 30, 32) und/oder zumindest einem Ableiterfähnchen (46, 50, 52) aufweisenden Flächenbereich (22, 24, 26) der Stirnseite einer vorher gefertigten elektrochemischen Zelle (10) eingestellt wird.

12. Verfahren nach einem der vorhergehenden Ansprüche 10 oder 11, **dadurch gekennzeichnet, dass** die Größe und/oder Form von zumindest einem ableiterfähnchenfreien Flächenbereich (28, 30, 32) und/oder zumindest einem Ableiterfähnchen (46, 50, 52) aufweisenden Flächenbereich (28, 30, 32) der Stirnseite, insbesondere optisch, erfasst wird.

## Geänderte Patentansprüche

### Geänderte Patentansprüche gemäss Regel 137(2) EPÜ.

1. Elektrochemische Zelle (10) mit einem Elektrodenwickel (20), umfassend eine erste und eine zweite Elektrode, wobei zumindest eine Elektrode Ableiterfähnchen (46, 50, 52) aufweist, von denen zumindest einige an einer ersten Stirnseite des Elektrodenwickels (20) umgebogen und mit einem Stromsammler (70) elektrisch leitend verbunden sind, wobei an der ersten Stirnseite des Elektrodenwickels (20) zumindest ein ableiterfähnchenfreier Flächenbereich (28, 30, 32) vorgesehen ist und der Stromsammler (70) eine Elektrolyt-Befüllöffnung (72, 74, 76) aufweist, die im Bereich des zumindest einen ableiterfähnchenfreien Flächenbereichs (28, 30, 32) angeordnet ist, **dadurch gekennzeichnet, dass** an der ersten Stirnseite des Elektrodenwickels (20) mehrere ableiterfähnchenfreie Flächenbereiche (28, 30, 32) vorgesehen sind und der Stromsammler (70) mehrere Elektrolyt-Befüllöffnungen (72, 74, 76) aufweist, die jeweils im Bereich eines ableiterfähnchenfreien Flächenbereichs (28, 30, 32) angeordnet sind.

2. Elektrochemische Zelle nach Anspruch 1, **dadurch gekennzeichnet, dass** der Abstand (X) zwischen Ableiterfähnchen (46, 50, 52) und/oder zwischen Gruppen (40, 42, 44) von Ableiterfähnchen (46, 50, 52) in einer Richtung des abgewickelten Elektrodenwickels (20) zunimmt.

3. Elektrochemische Zelle nach einem der vorhergehenden Ansprüche,
**dadurch gekennzeichnet, dass** die Breite (B) der
Ableiterfähnchen (46, 50, 52) und/oder von Gruppen (40, 42, 44) von Ableiterfähnchen (46, 50, 52) in einer Richtung des abgewickelten Elektrodenwickels (20) zunimmt.

4. Elektrochemische Zelle nach einem der vorhergehenden Ansprüche, **dadurch gekennzeichnet, dass** der Abstand (X) zwischen Ableiterfähnchen (46, 50, 52) und/oder Gruppen (40, 42, 44) von Ableiterfähnchen (46, 50, 52) in einem einer Wicklung entsprechenden Längenabschnitt (L) des abgewickelten Elektrodenwickels (20) konstant ist.

5. Elektrochemische Zelle nach einem der vorhergehenden Ansprüche, **dadurch gekennzeichnet, dass** die Breite (B) der Ableiterfähnchen (46, 50, 52) und/oder von Gruppen (40, 42, 44) von Ableiterfähnchen (46, 50, 52) in einem einer Wicklung entsprechenden Längenabschnitt (L) des abgewickelten Elektrodenwickels (20) konstant ist.

6. Elektrochemische Zelle nach einem der vorhergehenden Ansprüche, **dadurch gekennzeichnet, dass** der Stromsammler (70) mit Ableiterfähnchen (46, 50, 52) in einem Ableiterfähnchen (46, 50, 52) aufweisenden Flächenbereich (22, 24, 26) der ersten Stirnseite verschweißt ist, wobei die Fläche der Schweißstelle (60, 62, 64) kleiner ist als der die Ableiterfähnchen (46, 50, 52) aufweisende Flächenbereich (22, 24, 26).

7. Elektrochemische Zelle nach einem der vorhergehenden Ansprüche, **dadurch gekennzeichnet, dass** der Stromsammler (70) scheibenartig ausgebildet ist.

8. Elektrochemische Zelle nach einem der vorhergehenden Ansprüche, **dadurch gekennzeichnet, dass** die ableiterfähnchenfreien Flächenbereiche (28, 30, 32) der ersten Stirnseite und die Ableiterfähnchen (46, 50, 52) aufweisenden Flächenbereiche (22, 24, 26) der ersten Stirnseite etwa dieselbe Größe aufweisen.

9. Elektrochemische Zelle nach einem der vorhergehenden Ansprüche,
**dadurch gekennzeichnet, dass** der Elektrodenwickel (20) in einem Gehäuse (12) angeordnet und der Stromsammler (70) mit dem Gehäuse verbunden ist.

10. Verfahren zur Herstellung einer elektrochemischen Zelle, insbesondere nach einem der vorhergehenden Ansprüche, mit den Verfahrensschritten:
a. Herstellen eines Elektrodenbands (36),
b. Ausbilden von Ableiterfähnchen (46, 50, 52) an einem Rand (39, 54) des Elektrodenbands (36), wobei
i. der Abstand (X) zwischen Ableiterfähnchen (46, 50, 52) und/oder zwischen Gruppen (40, 42, 44) von Ableiterfähnchen (46, 50, 52) in einer Richtung des Elektrodenbands (36) zunimmt und/oder
ii. die Breite (B) der Ableiterfähnchen (46, 50, 52) und/oder von Gruppen (40, 42, 44) von Ableiterfähnchen (46, 50, 52) in einer Richtung des Elektrodenbands (36) zunimmt,
c. Aufwickeln des Elektrodenbands (36) zu einem Elektrodenwickel (20),
d. Anordnen eines Stromsammlers (70) mit mehreren Elektrolyt-Befüllöffnungen (72, 74, 76) an einer ersten Stirnseite des Elektrodenwickels (20) so, dass die Elektrolyt-Befüllöffnung (72, 74, 76) des Stromsammlers (70) in einem ableiterfähnchenfreien Flächenbereich (28, 30, 32) angeordnet sind,
e. Verschweißen des Stromsammlers (70) mit zumindest einigen Ableiterfähnchen (46, 50, 52).

11. Verfahren nach Anspruch 10, **dadurch gekennzeichnet, dass**
a. der Abstand zwischen Ableiterfähnchen (46, 50, 52) oder Gruppen (40, 42, 44) von Ableiterfähnchen (46, 50, 52) und/oder
b. die Breite von Ableiterfähnchen (46, 50, 52) und/oder Gruppen (40, 42, 44) von Ableiterfähnchen (46, 50, 52) unter Berücksichtigung einer erfassten Größe und/oder Form von zumindest einem ableiterfähnchenfreien Flächenbereich (28, 30, 32) und/oder zumindest einem Ableiterfähnchen (46, 50, 52) aufweisenden Flächenbereich (22, 24, 26) der Stirnseite einer vorher gefertigten elektrochemischen Zelle (10) eingestellt wird.

12. Verfahren nach einem der vorhergehenden Ansprüche 10 oder 11, **dadurch gekennzeichnet, dass** die Größe und/oder Form von zumindest einem ableiterfähnchenfreien Flächenbereich (28, 30, 32) und/oder zumindest einem Ableiterfähnchen (46, 50, 52) aufweisenden
Flächenbereich (28, 30, 32) der Stirnseite, insbesondere optisch, erfasst wird.
